# EUROPEAN PATENT SPECIFICATION

(11) **EP 1 961 172 B1**
(45) Date of publication and mention of the grant of the patent: **27.10.2010**
(21) Application number: 06845238.2
(22) Date of filing: 12.12.2006
(51) Int. Cl.: H04W 52/36

(54) **METHOD AND APPARATUS FOR SELECTING A TRANSPORT FORMAT COMBINATION**
VERFAHREN UND VORRICHTUNG ZUR AUSWAHL EINER TRANSPORTFORMATKOMBINATION
PROCEDE ET DISPOSITIF POUR SELECTIONNER UNE COMBINAISON DE FORMATS DE TRANSPORT

(30) Priority: 15.12.2005 US 750602 P; 02.10.2006 US 827811 P; 11.12.2006 US 869492 P
(43) Date of publication of application: 27.08.2008
(73) Proprietor: INTERDIGITAL TECHNOLOGY CORPORATION, Wilmington, DE 19810 (US)
(72) Inventor: WANG, Jin, Central Islip, New York 11722 (US); TERRY, Stephen, E., Northport, New York 11768 (US); CHANDRA, Arty, Manhasset Hills, New York 11040 (US); ZHANG, Guodong, Farmingdale, New York 11735 (US)
(74) Representative: Loqvist, Gabriel Mathias
(86) International application number: PCT/US2006/047280
(87) International publication number: WO 2007/078691

(56) References cited:
- WO-A-03/041317
- WO-A-03/043221
- WO-A-2004/059869

## Description

### FIELD OF INVENTION

The present invention is related to wireless communication systems. More particularly, the present invention is related to a method and apparatus for selecting a transport format combination (TFC). An example of such a system can be seen in document WO-A-03041317. The present invention is applicable to any wireless system, including high speed packet access+ (HSPA+) in third generation (3G) wireless communication systems and long term evolution (LTE) of the 3G wireless communication systems.

### BACKGROUND

Developers of 3G wireless communication systems are considering LTE of the 3G systems to develop a new radio access network for providing a high-data-rate, low-latency, packet-optimized, improved system with higher capacity and better coverage. In order to achieve these goals, instead of using code division multiple access (CDMA) which is currently used in 3G systems, orthogonal frequency division multiple access (OFDMA) and frequency division multiple access (FDMA) are proposed as air interfaces of LTE of 3G to be used in downlink and uplink transmissions, respectively. In parallel, also being considered is an evolved packet-optimized system, so called HSPA+, which is a conventional CDMA-based system.

The basic uplink transmission scheme in LTE is based on a low peak-to-average power ratio (PAPR) single-carrier FDMA transmission with a cyclic prefix to achieve uplink inter-user orthogonality and to enable efficient frequency-domain equalization at the receiver side. Both localized and distributed transmission may be used to support both frequency-adaptive and frequency-diversity transmission. The uplink transmission scheme in HSPA+ is based on CDMA.

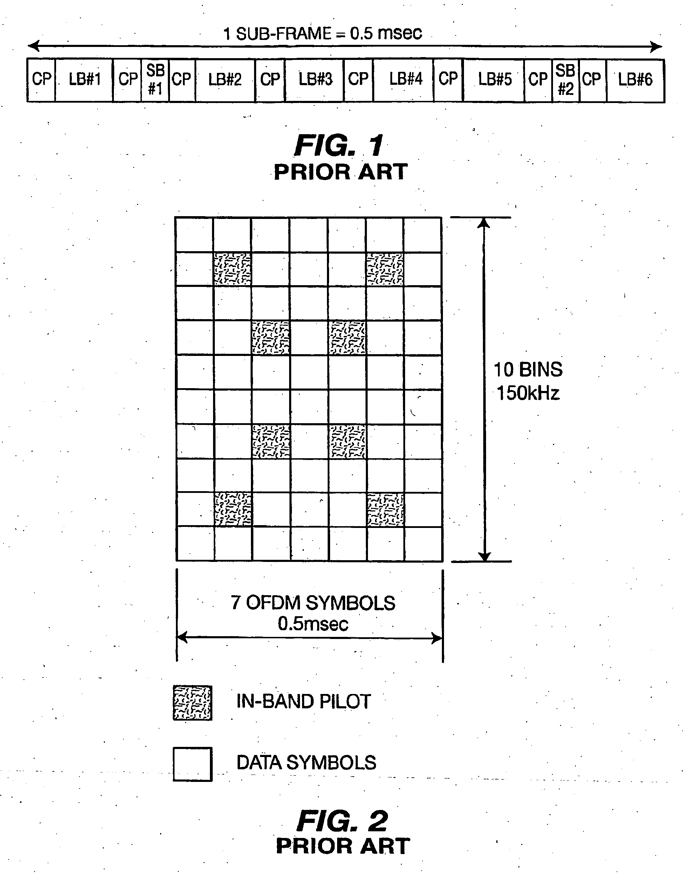

Figure 1 shows a basic sub-frame structure for uplink transmission proposed in LTE. The sub-frame includes six long blocks (LBs) and two short blocks (SBs). Alternatively, three SBs may be used per sub-frame. Figure 2 shows the allocation of subcarrier blocks in the frequency domain. Seven (7) orthogonal frequency division multiplexing (OFDM) symbols are transmitted during a 0.5 msec subframe over allocated subcarriers, (e.g., ten (10) subcarriers). In-band pilot symbols and data symbols are multiplexed in the subcarriers as shown in Figure 2.

Due to the change of the physical layer structure, new attributes and resource allocation scheme for uplink transmission, TFC selection procedures defined in the current wireless communication standards cannot deal with the new system requirement and thus part of it should be re-designed. In LTE, the number of subcarrier blocks and the number of TTIs are new radio resources to be considered for TFC selection, and the radio resource and parameters reallocated for the retransmission of the same data block may be different from what are used for the initial transmission. In HSPA+ and LTE, even when the radio resources and parameters allocated for the retransmission of the same data block remain the same as what are used for the initial transmission, using the same TFC selection, (especially the same modulation and coding scheme (MCS)), may not be efficient to overcome the fading channel and to reduce the number of retransmissions.

Therefore, it would be desirable to provide a new TFC selection procedure for one set of data blocks among a plurality of sets of data blocks to take into account these new features and to change the MCS for the subsequent retransmissions to adapt to the channel conditions.

SUMMARY

The present invention is related to a method and apparatus for selecting a TFC for one set of data blocks among a plurality of sets of data blocks. A TFC recovery and elimination unit generates an allowed transport format combination set (TFCS) subset by recovering supported TFCs and eliminating not supported TFCs based on allocated radio resources and parameters. An attribute of a transport format includes an MCS and the number and distribution of subcarrier blocks. A multiplexing and transmission sequence number (TSN) setting unit generates an LTE MAC protocol data unit (PDU) by multiplexing at least one higher layer PDU within a maximum supported LTE MAC PDU size. A TFC selection and padding unit selects a TFC for the LTE MAC PDU from the allowed TFCS subset and performs padding of the LTE MAC PDU, if necessary, so that the LTE MAC PDU fits into the selected TFC. For retransmission, a new allowed TFCS subset may be generated based on new radio resources and parameters and the LTE MAC PDU may be fragmented.

BRIEF DESCRIPTION OF THE DRAWINGS

Figure 1 shows a proposed basic sub-frame structure for the uplink transmission in LTE.

Figure 2 shows allocation of subcarrier blocks in the frequency domain in LTE.

Figure 3 is a wireless communication system configured in accordance with the present invention.

Figure 4 is a block diagram of a TFC selection unit in accordance with the present invention.

Figure 5 is a flow diagram of a process for selecting a TFC in accordance with the present invention.

DETAILED DESCRIPTION OF THE PREFERRED EMBODIMENTS

When referred to hereafter, the terminology "WTRU" includes but is not limited to a user equipment (UE), a mobile station (STA), a fixed or mobile subscriber unit, a pager, or any other type of device capable of operating in a wireless environment. When referred to hereafter, the terminology "Node-B" includes but is not limited to a base station, an evolved Node-B (e-Node-B), a site controller, an access point (AP) or any other type of interfacing device in a wireless environment.

The features of the present invention may be incorporated into an integrated circuit (IC) or be configured in a circuit comprising a multitude of interconnecting components.

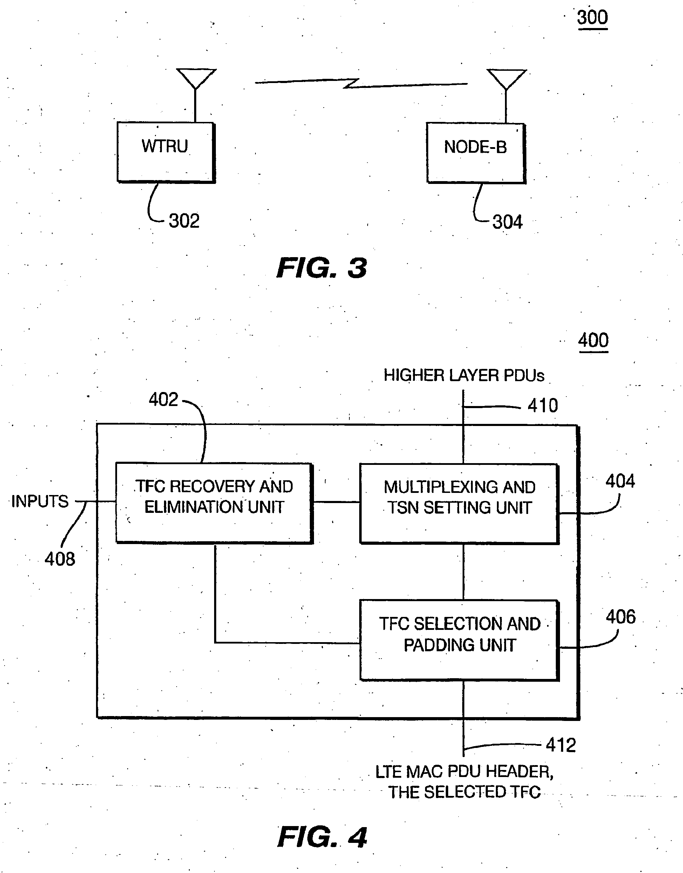

Figure 3 is a wireless communication system 300 configured in accordance with the present invention. The system 300 includes a WTRU 302 and a Node-B 304. The Node-B 304 dynamically allocates radio resources and parameters to the WTRU 302 for both downlink and uplink transmissions. The allocated radio resources and parameters include, but are not limited to, a maximum allowed transmit power, a recommended MCS, the number and distribution of subcarrier blocks, the number ofTTIs, or the like. The WTRU 302 then selects a TFC based on the allocated resources and parameters for uplink transmission.

A transport format (TF) includes a dynamic part and a semi-static part. In accordance with the present invention, the dynamic part of the TF includes additional attributes including a modulation rate, a coding rate, and the number and distribution of subcarrier blocks (for LTE only). The dynamic part and the semi-static part of the TF are as follows:
Dynamic part: (transport block size, transport block set size, sub-TTI size, fragmentation ID, ***modulation rate, coding rate,distribution & number of subcarrier blocks (LTE only)*}**
Semi-static part: {type of channel coding, size of cyclic redundancy check (CRC)}

Figure 4 is a block diagram of a TFC selection unit 400 in accordance with the present invention. The TFC selection unit 400 may be included in a MAC layer of a WTRU 302 or any network entity, such as a Node-B 304. The TFC selection unit 400 includes a TFC recovery and elimination unit 402, a multiplexing and TSN setting unit 404 and a TFC selection and padding unit 406. The TFC recovery and elimination unit 402 computes an allowed TFCS subset by eliminating not supported TFCs and recovering supported TFCs based on inputs 408. The multiplexing and TSN setting unit 404 is responsible for concatenating multiple higher layer PDUs 410 into an LTE MAC PDU, (i.e., the LTE MAC PDU is the multiplexed higher layer PDUs), and optionally managing and setting a TSN per logical channel or MAC flow for each LTE MAC PDU. The TFC selection and padding unit 406 selects an appropriate TFC which can support the maximum LTE MAC PDU size and performs padding, if necessary, so that the LTE MAC PDU fits into the selected TFC. The output 412 of the TFC selection and padding unit 406 is a complete LTE MAC PDU header and the selected TFC.

The present invention considers three scenarios with respect to the TFC selection as follows:
1) Scenario 1: initial transmission of a new data block;
2) Scenario 2: retransmission of a previous failed data block without allocating new radio resources and parameters, (i.e., the data block is retransmitted using the same radio resources and parameters allocated for the initial transmission); and
3) Scenario 3: retransmission of a previous failed data block with new radio resources and parameters, (i.e., the data block is retransmitted using new resources and parameters).

For scenario 1, (i.e., initial transmission), the TFC recovery and elimination unit 402 determines a state, (either supported or blocked), of each of the TFCs to compute an allowed TFCS subset. The inputs to the TFC recovery and elimination unit 402 for TFC recovery and elimination may include at least one of, but not limited to:
a) buffer occupancy of each logical channel;
b) a priority of each logical channel and MAC flow (alternatively, just an indication of the highest priority MAC flow with data to transmit);
c) a remaining transmission power calculated from the maximum allowed power and power requirements for other applications;
d) a TFCS configured by radio resource control (RRC), the TFCS including all possible MCS and relevant subset of subcarrier blocks;
e) a hybrid automatic repeat request (H-ARQ) identity (ID);
f) the maximum number of H-ARQ retransmissions;
g) a fragmentation ID;
h) a recommended MCS;
i) allocated subcarrier blocks (LTE only); and
j) the allocated number of TTIs.

The buffer occupancy is used to determine the amount of data available to be transmitted and the LTE MAC PDU size. The priority of each logical channel and MAC flow, (or the indication of the highest priority MAC flow with data to transmit), is used to determine how the logical channel data will be multiplexed into a MAC PDU. The remaining transmission power is used to determine the LTE MAC PDU size, MCS, or the like.

A TFCS is a set of TFCs that are allowed to choose from for an upcoming transmission. The TFCS may be specified by the standards and/or configured by RRC signaling. The TFCS may be dynamically adjusted by fast MAC or physical layer signaling from a Node-B.

The H-ARQ ID is used to determine the H-ARQ entity that will process the LTE MAC PDU. The maximum number of H-ARQ retransmissions informs the H-ARQ process the maximum number of H-ARQ transmissions for this LTE MAC PDU. The number of transmissions determines the residual block error rate (BLER) which is directly related to each logical channels quality of service (QoS) requirement. This affects the TFC selection unit 400 to decide if fragmentation should be used and MCS should be changed.

The fragmentation ID determines if further fragmentation will be performed and/or MCS should be changed. The recommended MCS affects the determination of an appropriate MCS for transmission. The allocated subcarrier blocks and the allocated number of TTIs are used to determine a proper LTE MAC PDU size.

The remaining power is computed by subtracting power requirements for other applications from the maximum allowed power. The maximum allowed power is set to the minimum of a scheduled maximum allowed power (preferably scheduled by the Node-B 304) and the WTRU maximum transmitter power. The scheduled maximum allowed power may be controlled by the network through layer 2 (L2) or layer 3 (L3) signaling. The remaining power is used as a power ceiling if the Node-B 304 does not provide a recommended MCS. If the Node-B 304 provides the WTRU 302 with the recommended MCS, the corresponding transmit power for the recommended MCS is calculated and compared with the remaining power, whichever smaller is used as a power ceiling for TFC recovery and elimination.

The TFC recovery and elimination unit 402 calculates the power requirement for each of the TFCs in the TFCS. The power requirement for each TFC is calculated based on the number of bits in each TFC, the allocated subset of subcarrier blocks (LTE only), an MCS used in each TFC, and an overhead for fragmentation if fragmentation is needed for transmission.

The TFC recovery and elimination unit 402 eliminates any TFC whose power requirement exceeds the power ceiling, whose required number of subcarrier blocks exceeds the allocated number of subcarrier blocks (LTE only), and whose MCS exceeds the recommended MCS by setting the state of such TFC as blocked, and recovers the remaining TFCs by setting the state of such TFCs as supported. The TFC recovery and elimination process may be further affected by fast MAC or physical layer signaling from the Node-B that either restricts or expands the allowed set of TFCs on a TTI or semi-TTI basis.

The multiplexing and TSN setting unit 404 determines the maximum supported LTE MAC PDU size based on the power ceiling, (i.e., the recommended MCS and the remaining power), allocated radio resources, (such as scheduled subcarriers, number of TTIs), available data for transmission, the largest available supported TFC, or the like and performs either concatenation or segmentation of the higher layer MAC PDU 410. If the data block size from an RLC buffer does not exceed the maximum supported LTE MAC PDU, the multiplexing and TSN setting unit 404 may multiplex multiple higher layer MAC PDUs into an LTE MAC PDU.

If the data block size from the RLC buffer exceeds the maximum supported LTE MAC PDU, the data block is segmented into multiple pieces to make each piece fit the maximum supported LTE MAC PDU size. The LTE MAC PDU may also be a combination of concatenated and segmented higher layer PDUs. The multiplexing and TSN setting unit 404 optionally manages and sets the TSN per logical channel or MAC flow for each LTE MAC PDU and/or each data block within the LTE MAC PDU.

The TFC selection and padding unit 406 then selects preferably the highest TFC calculated from the multiplexed LTE MAC PDU size and the TFCs in the allowed TFCS subset. If the recommended MCS is provided, the MCS in the selected TFC should not be greater than the recommended MCS. The TFC selection and padding unit 406 then performs padding, if necessary, so that the LTE MAC PDU fits into the selected TFC.

For scenario 2, (i.e., retransmission without new radio resources and parameters), the TFC recovery and elimination unit 402 is not needed to calculate a new allowed TFCS subset again and the allowed TFCS subset used for the initial transmission is used for the retransmission. For retransmission, the initial LTE MAC PDU may or may not be fragmented.

If fragmentation is not used for retransmission, the TFC selection and padding unit 406 may select a TFC with an MCS lower than what was used for the initial transmission that can still support the same LTE MAC PDU size as was used for the initial transmission. In the case of LTE, the number of subcarriers required for the new MCS maybe different from what was used in the initial transmission and only a subset of the total allocated subcarriers may be used. Padding is necessary to make the PDU the same size as the initial transmission when fragmentation is not used.

If fragmentation is used, the multiplexing and TSN setting unit 404 considers the necessary overhead for fragmentation for determining the fragmented LTE MAC PDU size to make sure that the power ceiling may support this PDU size. For each retransmission, the LTE MAC PDU may be fragmented to several fragmented PDUs by the TFC selection and padding unit 406. The number of fragmented PDUs is determined based on the channel condition measurement. Preferably, the same TFC is used for the first retransmission as the initial transmission and more robust MCS may be used for the subsequent retransmissions.

For the subsequent retransmissions, based on an H-ARQ feedback, (i.e., either a positive acknowledgement (ACK) or a negative acknowledgement (NACK)), of each fragmented PDU, only the fragmented PDUs responded with a NACK are retransmitted. To increase the probability of successful transmission, a TFC with a lower MCS, (compared with the highest allowed MCS), or corresponding subcarrier blocks within the allowed TFCS subset (for LTE) may be selected for the fragmented PDUs in the retransmission. The fragmented PDUs do not have to be the same size as the initial transmission. If the recommended MCS is given, the MCS in the selected TFC should not be greater than the recommended MCS.

For scenario 3, (i.e., retransmission with new radio resources and parameters), new radio resources and parameters, (e.g., the maximum allowed transmission power, the number of subcarrier blocks (for LTE) and a recommended MCS), are re-allocated for retransmissions. The TFC recovery and elimination unit 402 repeats the allowed TFCS subset calculation procedure in scenario 1 for calculating a new allowed TFCS subset based on the new inputs.

Iffragmentation is not used, the size of the retransmitted LTE MAC PDU should be same to that of the initial transmission for soft combining, (i.e., incremental redundancy or Chase combing), at the receiver side. If fragmentation is not used, the multiplexing and TFC selection are applied as in scenario 1.

If fragmentation is used for the retransmission, for each retransmission, the LTE MAC PDU may be fragmented to several fragmented PDUs. The number of fragmented PDUs is determined based on channel condition measurement. Optionally, more robust TFC may be used for the subsequent retransmissions. Alternatively, a TFC with a lower MCS may be used for the first retransmission.

For the subsequent retransmissions, based on the ACK/NACK feedback of each fragmented PDU, only the NACKed fragmented PDUs are retransmitted. To increase the probability of successful transmission, a lower MCS, (compared with the highest allowed MCS), and (for LTE) corresponding subcarrier blocks within the allowed TFCS subset may be selected for the fragmented PDUs in the retransmissions. The fragmented PDUs do not have to be the same size as the initial transmission. If the recommended MCS is given; the MCS in the selected TFC should not be greater than the recommended MCS.

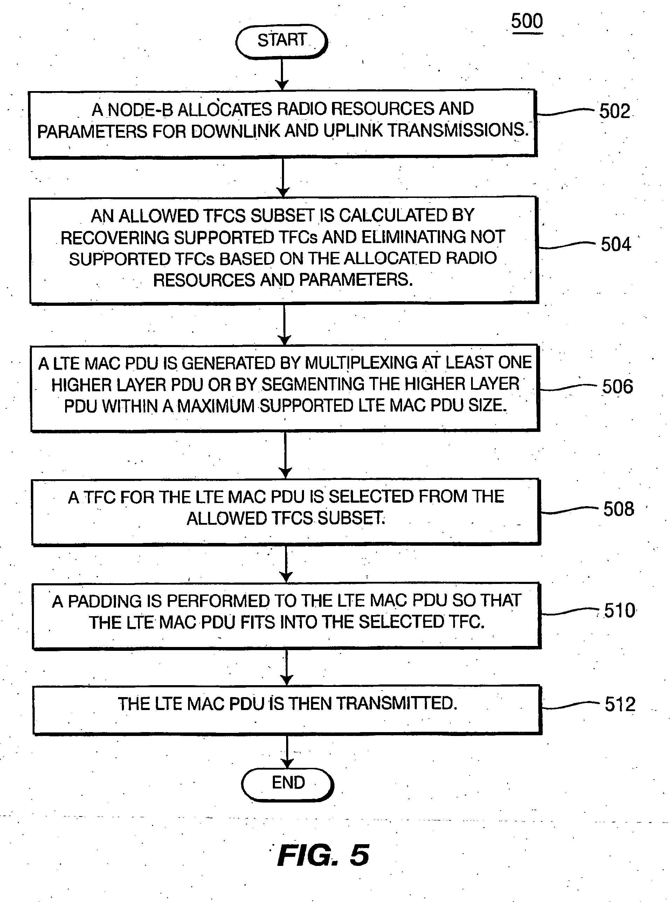

Figure 5 is a flow diagram of a process 500 for selecting a TFC in accordance with the present invention. A Node-B allocates radio resources and parameters for downlink and uplink transmissions (step 502). An allowed TFCS subset is calculated by recovering supported TFCs and eliminating not supported TFCs based on the allocated radio resources and parameters (step 504). An LTE MAC PDU is generated by multiplexing at least one higher layer PDU or by segmenting the higher layer PDUs within a maximum supported LTE MAC PDU size (step 506). A TFC for the LTE MAC PDU is selected from the allowed TFCS subset (step 508). Padding is performed to the LTE MAC PDU, if necessary, so that the LTE MAC PDU fits into the selected TFC (step 510). The LTE MAC PDU is then transmitted (step 512).

### Embodiments.

1. A method for selecting a TFC for wireless transmission of data in a wireless communication system.

2. The method of embodiment 1, comprising the step of allocating radio resources and parameters for transmission.

3. The method of embodiment 2, comprising the step of generating an allowed TFCS subset by recovering supported TFCs and eliminating not supported TFCs based on the allocated radio resources and parameters.

4. The method of embodiment 3, wherein an attribute of a TF including an MCS.

5. The method as in any of the embodiments 1-4, comprising the step of generating a MAC PDU by multiplexing at least one higher layer PDU within a maximum supported MAC PDU size.

6. The method of embodiment 5, comprising the step of selecting a TFC for the MAC PDU from the allowed TFCS subset.

7. The method of embodiment 6, comprising the step of performing a padding to the MAC PDU so that the MAC PDU fits into the selected TFC.

8. The method of embodiment 7, comprising the step of transmitting the MAC PDU.

9. The method as in any of the embodiments 3-8, wherein the allowed TFCS subset is generated based on a remaining transmit power.

10. The method as in any of the embodiments 3-9, wherein the allowed TFCS subset is generated based on a transmit power corresponding to a recommended MCS.

11. The method as in any of the embodiments 3-10, wherein the allowed TFCS subset is generated by eliminating any TFC whose power requirement exceeds the remaining transmit power and the transmit power corresponding to the recommended MCS.

12. The method as in any of the embodiments 3-11, wherein the allowed TFCS subset is generated by eliminating any TFC whose required number of subcarrier blocks exceeds an allocated number of subcarrier blocks.

13. The method as in any of the embodiments 3-12, wherein the allowed TFCS subset is generated by eliminating any TFC whose MCS exceeds the recommended MCS.

14. The method as in any of the embodiments 4-13, wherein the attribute of the TF includes distribution and the number of subcarrier blocks.

15. The method as in any of the embodiments 3-14, wherein the allowed TFCS subset is generated based on at least one of a remaining transmit power, a transmit power corresponding to a recommended MCS, and the number of allocated subcarrier blocks.

16. The method as in any of the embodiments 8-15, further comprising the step of retransmitting the MAC PDU when an initial transmission of the MAC PDU fails.

17. The method of embodiment 16, wherein the retransmission is performed by using the same radio resources and parameters used for the initial transmission of the MAC PDU.

18. The method as in any of the embodiments 16-17, wherein the same TFC used for the initial transmission is used for retransmission of the MAC PDU.

19. The method as in any of the embodiment 16-17, wherein a new TFC is selected for the retransmission of the MAC PDU.

20. The method as in any of the embodiments 16-19, wherein the MAC PDU is fragmented into multiple fragmented PDUs for retransmission, whereby each fragmented PDU is retransmitted separately.

21. The method of embodiment 20, wherein an overhead for fragmentation is considered for the maximum supported MAC PDU size.

22. The method as in any of the embodiments 20-21, wherein the same TFC used for the initial transmission of the MAC PDU is used for first retransmission of the fragmented PDUs.

23. The method as in any of the embodiments 20-21, wherein a TFC with a lower MCS compared to the one used for initial transmission of the MAC PDU is used for first retransmission of the fragmented PDUs.

24. The method as in any of the embodiments 20-23, wherein only fragments acknowledged with a NACK are subsequently retransmitted.

25. The method of embodiment 24, wherein a TFC with a lower MCS compared to a highest allowable MCS is used for the fragments acknowledged with a NACK.

26. The method as in any of the embodiments 8-25, further comprising the step of allocating new radio resources and parameters when transmission of the MAC PDU fails.

27. The method of embodiment 26, comprising repeating steps in embodiments 2-7 for selecting a new TFC for retransmission of the MAC PDU.

28. The method of embodiments 27, wherein the MAC PDU is fragmented into multiple fragmented PDUs, whereby each fragmented PDU is retransmitted separately.

29. The method of embodiment 28, wherein an overhead for fragmentation is considered for the maximum supported MAC PDU size.

30. The method as in any of the embodiments 28-29, wherein the same TFC used for initial transmission of the MAC PDU is used for first retransmission of the fragmented PDUs.

31. The method as in any of the embodiments 28-29, wherein a TFC with a lower MCS compared to the one used for initial transmission of the MAC PDU is used for first retransmission of the fragmented PDUs.

32. The method as in any of the embodiments 28-31, wherein only fragmented PDUs acknowledged with a NACK are subsequently retransmitted.

33. The method of embodiment 32, wherein a TFC with a lower MCS compared to a highest allowable MCS is used for the fragmented PDUs acknowledged with a NACK.

34. The method as in any of the embodiments 1-33, wherein the wireless communication system is a 3G HSPA system.

35. The method as in any of the embodiments 1-34, wherein the wireless communication system is a long term evolution of a 3G system.

36. An apparatus for selecting a TFC for wireless transmission of data in a wireless communication system.

37. The apparatus of embodiment 36 comprising a TFC recovery and elimination unit for generating an allowed TFCS subset by recovering supported TFCs and eliminating not supported TFCs based on allocated radio resources and parameters.

38. The apparatus of embodiment 37, wherein an attribute of a TF including an MCS.

39. The apparatus as in any of the embodiments 37-38, comprising a multiplexing and TSN setting unit for generating a MAC PDU by multiplexing at least one higher layer PDU within a maximum supported MAC PDU size.

40. The apparatus of embodiment 39, comprising a TFC selection and padding unit for selecting a TFC for the MAC PDU from the allowed TFCS subset and performing a padding to the MAC PDU so that the MAC PDU fits into the selected TFC.

41. The apparatus as in any of the embodiments 37-40, wherein the allowed TFCS subset is generated based on a remaining transmit power.

42. The apparatus as in any of the embodiments 37-41, wherein the allowed TFCS subset is generated based on a transmit power corresponding to a recommended MCS.

43. The apparatus as in any of the embodiments 37-42, wherein the allowed TFCS subset is generated by eliminating any TFC whose power requirement exceeds the remaining transmit power and the transmit power corresponding to the recommended MCS.

44. The apparatus as in any of the embodiments 37-43, wherein the allowed TFCS subset is generated by eliminating any TFC whose required number of subcarrier blocks exceeds an allocated number of subcarrier blocks.

45. The apparatus as in any of the embodiments 37-44, wherein the allowed TFCS subset is generated by eliminating any TFC whose MCS exceeds the recommended MCS.

46. The apparatus as in any of the embodiments 38-45, wherein the attribute of the TF includes distribution and number of subcarrier blocks.

47. The apparatus as in any of the embodiments 37-46, wherein the allowed TFCS subset is generated based on at least one of a remaining transmit power, a transmit power corresponding to a recommended MCS, and the number of allocated subcarrier blocks.

48. The apparatus as in any of the embodiments 40-47, wherein the MAC PDU is retransmitted when an initial transmission of the MAC PDU fails.

49. The apparatus of embodiment 48, wherein the retransmission is performed by using the same radio resources and parameters used for the initial transmission of the MAC PDU.

50. The apparatus as in any of the embodiments 48-49, wherein the same TFC used for the initial transmission is used for retransmission of the MAC PDU.

51. The apparatus as in any of the embodiments 48-49, wherein a new TFC is selected for the retransmission of the MAC PDU.

52. The apparatus as in any of the embodiments 48-51, wherein the MAC PDU is fragmented into multiple fragmented PDUs for retransmission, whereby each fragmented PDU is retransmitted separately.

53. The apparatus of embodiment 52, wherein the multiplexing and TSN setting unit considers an overhead for fragmentation for the maximum supported MAC PDU size.

54. The apparatus as in any of the embodiments 52-53, wherein the same TFC used for the initial transmission of the MAC PDU is used for first retransmission of the fragmented PDUs.

55. The apparatus as in any of the embodiments 52-53, wherein a TFC with a lower MCS compared to the one used for initial transmission of the MAC PDU is used for first retransmission of the fragmented PDUs.

56. The apparatus as in any of the embodiments 52-55, wherein only fragments acknowledged with a NACK are subsequently retransmitted.

57. The apparatus of embodiment 56, wherein a TFC with a lower MCS compared to a highest allowable MCS is used for the fragments acknowledged with a NACK.

58. The apparatus of embodiment 48, wherein the TFC recovery and elimination unit generates a new allowed TFCS subset based on new radio resources and parameters when transmission of the MAC PDU fails, whereby the MAC PDU is retransmitted by using the new allowed TFCS subset.

59. The apparatus of embodiment 58, wherein the MAC PDU is fragmented into multiple fragmented PDUs, whereby each fragmented PDU is retransmitted separately.

60. The apparatus of embodiment 59, wherein the multiplexing and TSN setting unit considers an overhead for fragmentation for the maximum supported MAC PDU size.

61. The apparatus as in any of the embodiments 59-60, wherein the same TFC used for initial transmission of the MAC PDU is used for first retransmission of the fragmented PDUs.

62. The apparatus as in any of the embodiments 59-60, wherein a TFC with a lower MCS compared to the one used for initial transmission of the MAC PDU is used for first retransmission of the fragmented PDUs.

63. The apparatus as in any of the embodiments 59-62, wherein only fragmented PDUs acknowledged with a NACK are subsequently retransmitted.

64. The apparatus as in any of the embodiments 59-63, wherein a TFC with a lower MCS compared to a highest allowable MCS is used for the fragmented PDUs acknowledged with a NACK

65. The apparatus as in any of the embodiments 36-64, wherein the wireless communication system is a 3G HSPA system.

66. The apparatus as in any of the embodiments 36-64, wherein the wireless communication system is a long term evolution of a 3G system.

Although the features and elements of the present invention are described in the preferred embodiments in particular combinations, each feature or element can be used alone without the other features and elements of the preferred embodiments or in various combinations with or without other features and elements of the present invention. The methods or flow charts provided in the present invention may be implemented in a computer program, software, or firmware tangibly embodied in a computer-readable storage medium for execution by a general purpose computer or a processor. Examples of computer-readable storage mediums include a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs).

Suitable processors include, by way of example, a general purpose processor, a special purpose processor, a conventional processor, a digital signal - processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any integrated circuit, and/or a state machine.

A processor in association with software may be used to implement a radio frequency transceiver for in use in a wireless transmit receive unit (WTRU), user equipment, terminal, base station, radio network controller, or any host computer. The WTRU may be used in conjunction with modules, implemented in hardware and/or software, such as a camera, a videocamera module, a videophone, a speakerphone, a vibration device, a speaker, a microphone, a television transceiver, a handsfree headset, a keyboard, a Bluetooth module, a frequency modulated (FM) radio unit, a liquid crystal display (LCD) display unit, an organic light-emitting diode (OLED) display unit, a digital music player, a media player, a video game player module, an Internet browser, and/or any wireless local area network (WLAN) module.

## Claims

1. A method for selecting a transport format combination TFC for wireless transmission of data, the method comprising:
a) allocating radio resources and parameters for transmission;
b) generating an allowed transport format combination set TFCS subset by recovering supported TFCs and eliminating non supported TFCs based on the allocated radio resources and parameters including allocated subcarrier blocks, an attribute of a transport format TF including a modulation and coding scheme MCS and distribution and number of subcarrier blocks;
c) generating a medium access control MAC protocol data unit PDU by multiplexing at least one higher layer PDU within a maximum supported MAC PDU size;
d) selecting a TFC for the MAC PDU from the allowed TFCS subset;
e) performing a padding to the MAC PDU so that the MAC PDU fits into the selected TFC; and
f) transmitting the MAC PDU.

2. The method of claim 1 wherein the allowed TFCS subset is generated based on a remaining transmit power.

3. The method of claim 1 wherein the allowed TFCS subset is generated based on at least one of a remaining transmit power, a transmit power corresponding to a recommended MCS, and the number of allocated subcarrier blocks.

4. The method of claim 1 further comprising:
g) retransmitting the MAC PDU when an initial transmission of the MAC
PDU fails, the retransmission being performed by using the same radio resources and parameters used for the initial transmission of the MAC PDU.

5. The method of claim 4 wherein the MAC PDU is fragmented into multiple fragmented PDUs for retransmission, whereby each fragmented PDU is retransmitted separately.

6. The method of claim 5 wherein only fragments acknowledged with a negative acknowledgement NACK are subsequently retransmitted.

7. The method of claim 1 further comprising:
g) allocating new radio resources and parameters when transmission of the MAC PDU fails; and
repeating steps b)-e) for selecting a new TFC for retransmission of the MAC PDU.

8. The method of claim 7 wherein the MAC PDU is fragmented into multiple fragmented PDUs, whereby each fragmented PDU is retransmitted separately.

9. An apparatus for selecting a transport format combination (TFC) for wireless transmission of data, the apparatus comprising:
a TFC recovery and elimination unit for generating an allowed transport format combination set TFCS subset by recovering supported TFCs and eliminating non supported TFCs based on allocated radio resources and parameters including allocated subcarrier blocks, an attribute of a transport format TF including a modulation and coding scheme MCS and distribution and number of subcarrier blocks;
a multiplexing and transmission sequence number TSN setting unit for generating a medium access control MAC protocol data unit PDU by multiplexing at least one higher layer PDU within a maximum supported MAC PDU size; and
a TFC selection and padding unit for selecting a TFC for the MAC PDU from the allowed TFCS subset and performing a padding to the MAC PDU so that the MAC PDU fits into the selected TFC.

10. The apparatus of claim 9 wherein the allowed TFCS subset is generated based on at least one of a remaining transmit power, a transmit power corresponding to a recommended MCS, and the number of allocated subcarrier blocks.

11. The' apparatus of claim 9 wherein the MAC PDU is retransmitted when an initial transmission of the MAC PDU fails, the retransmission being performed by using the same radio resources and parameters used for the initial transmission of the MAC PDU.

12. The apparatus of claim 11 wherein the MAC PDU is fragmented into multiple fragmented PDUs for retransmission, whereby each fragmented PDU is retransmitted separately.

13. The apparatus of claim 12 wherein only fragments acknowledged with a negative acknowledgement NACK are subsequently retransmitted.

14. The apparatus of claim 9 wherein the TFC recovery and elimination unit generates a new allowed TFCS subset based on new radio resources and parameters when transmission of the MAC PDU fails, whereby the MAC PDU is retransmitted by using the new allowed TFCS subset.

15. The apparatus of claim 14 wherein the MAC PDU is fragmented into multiple fragmented PDUs, whereby each fragmented PDU is retransmitted separately.

## Patentansprüche

1. Verfahren zum Auswählen einer Transportformatkombination TFC zur drahtlosen Übertragung von Daten mit folgenden Schritten:
a) Zuordnen von Funkressourcen und Parametern für die Übertragung,
b) Erzeugen einer zulässigen Teilmenge eines Transportformatkombinations-Satzes TFCS durch Wiedergewinnen unterstützter TFCs und Beseitigen nicht unterstützter TFCs auf der Grundlage der zugeordneten Funkressourcen und Parameter, einschließlich zugeordneter Unterträgerblöcke, eines Attributs eines Transportformats TF, einschließlich eines Modulations- und Codierungsschemas MCS, und der Verteilung und der Anzahl von Unterträgerblöcken,
c) Erzeugen einer Medienzugriffssteuerungs-Protokolldateneinheit MAC-PDU durch Multiplexieren mindestens einer PDU einer höheren Schicht innerhalb einer maximalen unterstützten MAC-PDU-Größe,
d) Auswählen einer TFC für die MAC-PDU aus der zulässigen TFCS-Teilmenge,
e) Ausführen eines Stopfens der MAC-PDU, so dass die MAC-PDU in die ausgewählte TFC passt, und
f) Übertragen der MAC-PDU.

2. Verfahren nach Anspruch 1, wobei die zulässige TFCS-Teilmenge auf der Grundlage der restlichen Sendeleistung erzeugt wird.

3. Verfahren nach Anspruch 1, wobei die zulässige TFCS-Teilmenge auf der Grundlage von mindestens einer von einer restlichen Sendeleistung, einer einem empfohlenen MCS entsprechenden Sendeleistung und der Anzahl der zugeordneten Unterträgerblöcke erzeugt wird.

4. Verfahren nach Anspruch 1, welches ferner aufweist:
g) erneutes Übertragen der MAC-PDU, wenn eine anfängliche Übertragung der MAC-PDU fehlschlägt, wobei das erneute Übertragen unter Verwendung derselben Funkressourcen und Parameter ausgeführt wird, die für die anfängliche Übertragung der MAC-PDU verwendet wurden.

5. Verfahren nach Anspruch 4, wobei die MAC-PDU in mehrere fragmentierte PDUs zur erneuten Übertragung fragmentiert wird, wobei jede fragmentierte PDU getrennt erneut übertragen wird.

6. Verfahren nach Anspruch 5, wobei nur mit einer negativen Bestätigung NACK bestätigte Fragmente anschließend erneut übertragen werden.

7. Verfahren nach Anspruch 1, welches ferner aufweist:
g) Zuordnen neuer Funkressourcen und Parameter, wenn die Übertragung der MAC-PDU fehlschlägt, und
Wiederholen der Schritte b) - e) zum Auswählen einer neuen TFC zur erneuten Übertragung der MAC-PDU.

8. Verfahren nach Anspruch 7, wobei die MAC-PDU in mehrere fragmentierte PDUs fragmentiert wird, wobei jede fragmentierte PDU getrennt erneut übertragen wird.

9. Vorrichtung zum Auswählen einer Transportformatkombination TFC zur drahtlosen Übertragung von Daten, welche aufweist:
eine TFC-Wiedergewinnungs- und -Beseitigungseinheit zum Erzeugen einer zulässigen Teilmenge eines Transportformatkombinations-Satzes TFCS durch Wiedergewinnen unterstützter TFCs und Beseitigen nicht unterstützter TFCs auf der Grundlage zugeordneter Funkressourcen und Parameter, einschließlich zugeordneter Unterträgerblöcke, eines Attributs eines Transportformats TF, einschließlich eines Modulations- und Codierungsschemas MCS, und der Verteilung und der Anzahl von Unterträgerblöcken,
eine Multiplexierungs- und Übertragungssequenzanzahl-Festlegungseinheit (TSN-Festlegungseinheit) zum Erzeugen einer Medienzugriffssteuerungs-Protokolldateneinheit MAC-PDU durch Multiplexieren mindestens einer PDU einer höheren Schicht innerhalb einer maximalen unterstützten MAC-PDU-Größe und
eine TFC-Auswahl- und -Stopfeinheit zum Auswählen einer TFC für die MAC-PDU aus der zulässigen TFCS-Teilmenge und Ausführen eines Stopfens der MAC-PDU, so dass die MAC-PDU in die ausgewählte TFC passt.

10. Vorrichtung nach Anspruch 9, wobei die zulässige TFCS-Teilmenge auf der Grundlage von mindestens einer von einer restlichen Sendeleistung, einer einem empfohlenen MCS entsprechenden Sendeleistung und der Anzahl der zugeordneten Unterträgerblöcke erzeugt wird.

11. Vorrichtung nach Anspruch 9, wobei die MAC-PDU erneut übertragen wird, wenn eine anfängliche Übertragung der MAC-PDU fehlschlägt, wobei das erneute Übertragen unter Verwendung derselben Funkressourcen und Parameter ausgeführt wird, die für die anfängliche Übertragung der MAC-PDU verwendet wurden.

12. Vorrichtung nach Anspruch 11, wobei die MAC-PDU in mehrere fragmentierte PDUs zur erneuten Übertragung fragmentiert ist, wobei jede fragmentierte PDU getrennt erneut übertragen wird.

13. Vorrichtung nach Anspruch 12, wobei nur mit einer negativen Bestätigung NACK bestätigte Fragmente anschließend erneut übertragen werden.

14. Vorrichtung nach Anspruch 9, wobei die TFC-Wiedergewinnungs- und -Beseitigungseinheit eine neue zulässige TFCS-Teilmenge auf der Grundlage neuer Funkressourcen und Parameter erzeugt, wenn die Übertragung der MAC-PDU fehlschlägt, wobei die MAC-PDU unter Verwendung der neuen zulässigen TFCS-Teilmenge erneut übertragen wird.

15. Vorrichtung nach Anspruch 14, wobei die MAC-PDU in mehrere fragmentierte PDUs fragmentiert ist, wobei jede fragmentierte PDU getrennt erneut übertragen wird.

## Revendications

1. Procédé de sélection d'une combinaison de formats de transport TFC pour une transmission de données sans fil, le procédé comprenant :
a) l'affectation de ressources et de paramètres radio pour la transmission ;
b) la génération d'un sous-ensemble d'ensemble de combinaisons de formats de transport autorisées TFCS en récupérant les TFC supportées et en éliminant les TFC non supportées sur la base des ressources et des paramètres radio affectés, y compris les blocs de sous-porteuses affectés, un attribut d'un format de transport TF comprenant un schéma de modulation et de codage MCS et une répartition et un nombre de blocs de sous-porteuses ;
c) la génération d'une unité de données de protocole PDU de contrôle d'accès au support MAC en multiplexant au moins une PDU de couche supérieure dans le cadre d'une dimension de PDU MAC supportée maximum ;
d) la sélection d'un TFC pour la PDU MAC à partir du sous-ensemble de TFCS autorisées ;
e) la réalisation d'un remplissage vers la PDU MAC de sorte que la PDU MAC se place dans le TFC sélectionné ; et
f) la transmission de la PDU MAC.

2. Procédé selon la revendication 1, dans lequel le sous-ensemble de TFCS autorisées est généré sur la base d'une puissance de transmission restante.

3. Procédé selon la revendication 1, dans lequel le sous-ensemble de TFCS autorisées est généré sur la base d'au moins l'une d'une puissance de transmission restante, d'une puissance de transmission correspondant à un MCS recommandé, et du nombre de blocs de sous-porteuses affectés.

4. Procédé selon la revendication 1, comprenant en outré :
g) la retransmission de la PDU MAC lorsqu'une transmission initiale de la PDU MAC échoue, la retransmission étant effectuée en utilisant les mêmes ressources et paramètres radio que ceux utilisés pour la transmission initiale de la PDU MAC.

5. Procédé selon la revendication 4, dans lequel la PDU MAC est fragmentée en plusieurs PDU fragmentées pour la retransmission, moyennant quoi chaque PDU fragmentée est retransmise séparément.

6. Procédé selon la revendication 5, dans lequel seuls les fragments reconnus avec un accusé de réception négatif NACK sont ensuite retransmis.

7. Procédé selon la revendication 1, comprenant en outré :
g) l'affectation de nouvelles ressources et de nouveaux paramètres radio lorsque la transmission de la PDU MAC échoue ; et
la répétition des étapes b)-e) afin de sélectionner une nouvelle TFC pour la retransmission de la PDU MAC.

8. Procédé selon la revendication 7, dans lequel la PDU MAC est fragmentée en plusieurs PDU fragmentées, moyennant quoi chaque PDU fragmentée est retransmise séparément.

9. Appareil de sélection d'une combinaison de formats de transport (TFC) pour une transmission de données sans fil, l'appareil comprenant :
une unité de récupération et d'élimination de TFC destinée à générer un sous-ensemble d'ensemble de combinaisons de formats de transport autorisées TFCS en récupérant les TFC supportées et en éliminant les TFC non supportées sur la base des ressources et des paramètres radio affectés, y compris les blocs de sous-porteuses affectés, un attribut d'un format de transport TF comprenant un schéma de modulation et de codage MCS et une répartition et un nombre de blocs de sous-porteuses ;
une unité de définition de nombre de séquences de multiplexage et de transmission TSN destinée à générer une unité de données de protocole PDU de contrôle d'accès au support MAC en multiplexant au moins une PDU de couche supérieure dans le cadre d'une dimension de PDU MAC supportée maximum ; et
une unité de sélection et de remplissage de TFC destinée à sélectionner une TFC pour la PDU MAC à partir du sous-ensemble de TFC autorisées et à réaliser un remplissage vers la PDU MAC de sorte que la PDU MAC se place dans la TFC sélectionnée.

10. Appareil selon la revendication 9, dans lequel le sous-ensemble de TFCS autorisées est généré sur la base d'au moins l'une d'une puissance de transmission restante, d'une puissance de transmission correspondant à un MCS recommandé, et du nombre de blocs de sous-porteuses affectés.

11. Appareil selon la revendication 9, dans lequel la PDU MAC est retransmise lorsqu'une transmission initiale de la PDU MAC échoue, la retransmission étant effectuée en utilisant les mêmes ressources et paramètres radio que ceux utilisés pour la transmission initiale de la PDU MAC.

12. Appareil selon la revendication 11, dans lequel la PDU MAC est fragmentée en plusieurs PDU fragmentées pour la retransmission, moyennant quoi chaque PDU fragmentée est retransmise séparément.

13. Appareil selon la revendication 12, dans lequel seuls les fragments reconnus avec un accusé de réception négatif NACK sont ensuite retransmis.

14. Appareil selon la revendication 9, dans lequel l'unité de récupération et d'élimination de TFC génère un nouveau sous-ensemble de TFCS autorisées sur la base de nouvelles ressources et de nouveaux paramètres radio lorsque la transmission de la PDU MAC échoue, moyennant quoi la PDU MAC est retransmise en utilisant le nouveau sous-ensemble de TFCS autorisées.

15. Appareil selon la revendication 14, dans lequel la PDU MAC est fragmentée en plusieurs PDU fragmentées, moyennant quoi chaque PDU fragmentée est retransmise séparément.
